# EUROPÄISCHE PATENTSCHRIFT

(11) **EP 1 921 441 B1**
(45) Veröffentlichungstag und Bekanntmachung des Hinweises auf die Patenterteilung: **04.09.2013**
(21) Anmeldenummer: 06123573.5
(22) Anmeldetag: 07.11.2006
(51) Int. Cl.: G01N 21/84

(54) **Verfahren zum Analysieren einer Probe auf einem Testelement und Analysesystem**
Method for analysing a sample on a test element and analysis system
Appareil d'analyse d'un élément de test d'échantillon et système d'analyse

(43) Veröffentlichungstag der Anmeldung: 14.05.2008
(73) Patentinhaber: F. Hoffmann-La Roche AG, 4070 Basel (CH); Roche Diagnostics GmbH, 68305 Mannheim (DE)
(72) Erfinder: Schulat, Jochen, 68305 Mannheim (DE); Stenkamp, Bernd, Danville, CA 94526-5315 (CA); Schmelzeisen-Redeker, Günther, 64653 Lorsch (DE); Schmid, Wilfried, 68165 Mannheim (DE); Albrecht, Gertrud, 68239 Mannheim (DE); Menke, Andreas, 68305 Mannheim (DE); Kern, Bernhard, 69123 Heidelberg (DE); Schwoebel, Wolfgang, 68309 Mannheim (DE); Meinecke, Dieter, 68309 Mannheim (DE); Dickopf, Kai, 74906 Bad Rappenau (DE); Kalveram, Stefan, 68519 Viernheim (DE)
(74) Vertreter: Stößel, Matthias

(56) Entgegenhaltungen:
- EP-A- 1 213 579
- WO-A-00/19185
- US-A1- 2002 132 363

## Beschreibung

Die Erfindung bezieht sich auf ein Verfahren zum Analysieren einer Probe auf einem Testelement in einem Analysesystem, insbesondere zur Messung der Konzentration von Glukose in einer Körperflüssigkeit auf einem Teststreifen.

Zur Analyse von Proben, beispielsweise Körperflüssigkeiten wie Blut oder Urin, werden häufig Analysesysteme verwendet, bei denen sich die zu analysierenden Proben auf einem Testelement befinden und in einem Testfeld gegebenenfalls mit einer oder mehreren Reagenzien auf dem Testelement reagieren, bevor sie analysiert werden. Die optische, insbesondere photometrische, und die elektrochemische Auswertung von Testelementen stellen die gebräuchlichsten Verfahren zur schnellen Bestimmung der Konzentration von Analyten in Proben dar. Analysesysteme mit Testelementen zur Probenanalyse werden allgemein im Bereich der Analytik, der Umweltanalytik und vor allem im Bereich der medizinischen Diagnostik eingesetzt. Insbesondere im Bereich der Blutglukosediagnostik aus Kapillarblut besitzen Testelemente, die photometrisch oder elektrochemisch ausgewertet werden, einen großen Stellenwert.

Es gibt verschiedene Formen von Testelementen. Bekannt sind zum Beispiel im Wesentlichen quadratische Plättchen, die auch als Slides bezeichnet werden, in deren Mitte sich ein mehrschichtiges Testfeld befindet. Diagnostische Testelemente, die streifenförmig ausgebildet sind, werden als Teststreifen bezeichnet. Im Stand der Technik sind Testelemente umfassend beschrieben, beispielsweise in den Dokumenten DE-A 197 53 847, EP-A 0 821 233, EP-A 0 821 234 oder WO 97/02487. Die vorliegende Erfindung bezieht sich auf Testelemente beliebiger Form, insbesondere auf streifenförmige Testelemente.

Im Stand der Technik sind Testelemente bekannt, bei denen eine Probe auf eine Probenaufgabestelle aufgegeben wird und mittels Kapillarkraft in einen von der Probenaufgabestelle getrennten Analysebereich (Testfeld) transportiert wird. Ein solches Testelement ist beispielsweise Gegenstand der DE 197 53 847 A1.

Zur analytischen Untersuchung einer Probe auf einem Testelement sind im Stand der Technik Testelement-Analysesysteme bekannt, die eine Testelement-Aufnahme zum Positionieren des Testelements in einer Messposition und eine Mess- und Auswerteeinrichtung zur Durchführung einer Messung und Ermittlung eines hierauf resultierenden Analyseresultats enthalten.

WO 00/19185 A1 bezieht sich auf eine Vorrichtung zur photometrischen Auswertung von Testelementen, beinhaltend
- eine Beleuchtungseinheit mit mindestens einer ersten und einer zweiten Lichtquelle,
- eine Halterung zur Aufnahme eines Testelements mit einer Nachweiszone in der Weise, dass die Nachweiszone gegenüber der Beleuchtungseinheit positioniert wird,
- eine Detektionseinheit mit mindestens einem Detektor, der von der Nachweiszone reflektiertes oder durch die Nachweiszone transmittiertes Licht detektiert,
- eine Steuerungseinheit, die die beiden Lichtquellen aktiviert und das von der Detektionseinheit generierte Signal als Detektionssignal aufnimmt und
- eine Auswerteeinheit, die die Detektionssignale auswertet, um die in der Probe enthaltene Analytkonzentration zu ermitteln.

Zur Halterung des Testelementes in der Auswerteposition besitzt diese Positioniereinrichtung einen verschiebbar gelagerten Zapfen mit einem nach unten konisch zulaufenden Ende. Bei geeigneter Positionierung befindet sich die Spitze des Zapfens in einer Ausnehmung des Testelementes, so dass das Testelement in Richtung seiner Längsachse fixiert und positioniert wird. Der Zapfen kann auch dazu dienen, die Anwesenheit eines Testelementes beziehungsweise dessen Positionierung elektrisch zu signalisieren. Hierzu wird der Zapfen elektrisch leitfähig ausgeführt und z.B. auf der ihm gegenüberliegenden Seite der Vorrichtung ein Kontakt vorgesehen. Ohne ein Testelement wird der Zapfen mittels einer Feder gegen den Kontakt gedrückt und ein elektrischer Kontakt zwischen diesen beiden Elementen hergestellt. Wird nun ein Testelement eingeschoben, so schiebt es sich zunächst zwischen Zapfen und Kontakt, so dass der elektrische Kontakt aufgehoben wird. Beim Weiterschieben greift jedoch der Zapfen durch die Nut des Testelementes hindurch und der elektrische Kontakt schließt sich erneut. Der Kontakt kann z.B. auch durch einen seitlichen Ausleger des Zapfens betätigt werden.

In vielen bekannten Analysesystemen ist die Positionierung eines Testelements relativ zu einer Auswerteeinheit kritisch, insbesondere bei einer optischen Auswertung von Testelementen. Eine relative Positionierung des Analysebereichs eines Testelements zur Auswerteoptik ist von entscheidender Bedeutung für die Präzision und Richtigkeit der durchgeführten Messung zur Analyse einer Probe in dem Analysebereich.

Zur Gewährleistung einer korrekten Positionierung werden im Stand der Technik viele Lösungen bereitgestellt. Die Halterung gemäß der WO 00/19185 A1 stellt durch das Eingreifen des Zapfens in die Ausnehmung des Testelements eine Positionierung des Testelements in Längsrichtung (X-Richtung) sicher. Zur Positionierung in Querrichtung (Y-Richtung) weist die Halterung Führungselemente auf. Bei dieser und auch bei vielen anderen Halterungen für Testelemente in Analysesystemen kann jedoch eine Fehlpositionierung in senkrechter Richtung zu dem Analysebereich (Z-Richtung) nicht ausgeschlossen werden. Beispielsweise kann ein Benutzer das Testelement an der dem Zapfen abgewandten Seite so anheben, dass sich die Positionierung des Analysebereichs relativ zu der Analyseeinheit des Analysesystems so ändert, dass das Analyseergebnis verfälscht wird. Selbst bei einer Halterung an beiden Enden eines streifenförmigen Testelements, beispielsweise durch einen in eine Ausnehmung eingreifenden Zapfen an einem Ende und einen auf der Testelementoberfläche aufliegenden Niederhalter am anderen Ende des Testelements, kann eine Fehlposition des Analysebereichs in Z-Richtung auftreten, falls das Testelement zwischen den beiden Halteelementen durchgebogen ist. Daher ist es erforderlich, dass ein Analysesystem zum Analysieren einer Probe auf einem Testelement eine solche Fehlpositionierung in Z-Richtung erkennen kann, um die Anzeige von fehlerhaften Analyseergebnissen durch das Analysesystem zu vermeiden.

Die DE 199 32 846 A1 beschreibt ein Verfahren zum Erkennen der Fehlpositionierung eines optisch auswertbaren Teststreifens in einem Messgerät zur Messung einer Substanz in einer Flüssigkeit, wobei die zu untersuchende Flüssigkeit auf das Testfeld eines Teststreifens aufgetragen und die dadurch bewirkte Änderung des Reflexions- oder Transmissionsvermögens des Testfelds erfasst und ausgewertet wird. Dabei wird ein dem Testfeld des Teststreifens im Messgerät zugeordnetes Messfeld in mindestens zwei Bereiche aufgeteilt, die in Einschubrichtung des Teststreifens in das Messgerät hintereinander angeordnet sind und getrennt abgetastet werden. Der Teststreifen hat zumindest in einem in Einschubrichtung vor dem Testfeld liegenden Bereich in Einschubrichtung aufeinander folgende Zonen unterschiedlichen Reflexions- oder Transmissionsvermögens. Die Differenz der für die beiden Messbereiche erhaltenen Messwerte wird gebildet und mit einem vorgegebenen Schwellwert verglichen. Beim Überschreiten des Schwellwertes wird ein eine Fehlposition anzeigendes Signal erzeugt. Dieses Verfahren dient jedoch nur zum Erkennen einer Fehlpositionierung in X- oder Y-Richtung.

EP 1 213 579 A2 betrifft ein System zur Analyse von Probenflüssigkeiten durch Auswertung von Testelementen mit einer Analyseeinheit, wobei ein zu analysierendes Testelement durch eine Halterung in einer Analyseposition relativ zur Analyseeinheit positioniert wird und das System weiterhin eine Lagekontrolleinheit zur Kontrolle, ob ein Analysebereich des Testelements bestimmungsgemäß zu einer Analyseeinheit positioniert ist, beinhaltet. Die Lagekontrolleinheit umfasst eine Lichtquelle zur Bestrahlung einer Fläche des Testelements, vorzugsweise des Analysebereichs, einen Detektor zur Detektion von der Fläche reflektierten Lichts und eine Auswerteeinheit. Lichtquelle und Detektor sind dabei so zueinander positioniert, dass die Lichtintensität von spiegelnd reflektierter Strahlung am Detektor bei bestimmungsgemäßer Positionierung des Testelements verschieden von einer Lichtintensität bei Fehlpositionierung ist und die Auswerteeinheit aufgrund der Lichtintensität am Detektor eine etwaige Fehlpositionierung erkennt.

Die Aufgabe der vorliegenden Erfindung besteht darin, ein Verfahren zum Analysieren einer Probe auf einem Testelement in einem Analysesystem und ein Analysesystem zur Analyse einer Probe auf einem analytischen Testelement bereitzustellen, die die Nachteile des Standes der Technik vermeiden. Insbesondere soll bei dem erfindungsgemäßen Verfahren und dem erfindungsgemäßen Analysesystem eine Fehlpositionierung des Analysebereichs eines Testelements in Z-Richtung erkannt werden. Ferner soll das erfindungsgemäße Verfahren und das erfindungsgemäße Analysesystem gegenüber dem System und Verfahren gemäß EP 1 213 579 A2 empfindlicher auf eine Fehlpositionierung in Z-Richtung, insbesondere bei einem Durchbiegen des Testelements in Z-Richtung in einer Testelementaufnahme eines Analysesystems, reagieren.

Diese Aufgaben werden erfindungsgemäß gelöst durch ein Verfahren gemäß Anspruch 1 zum Analysieren einer Probe auf einem Testelement in einem Analysesystem mit einer Testelementaufnahme und einer Analyseeinheit, umfassend das Kontrollieren, ob ein Analysebereich des Testelements in der Testelementaufnahme relativ zu der Analyseeinheit in einer Analyseposition positioniert ist. Das Kontrollieren umfasst die Schritte
- Bestrahlen des Analysebereichs mit Licht mindestens einer Analyselichtquelle und einer Kontrolllichtquelle,
- Detektieren von an dem Analysebereich gestreutem oder reflektiertem Licht durch einen Detektor zum Erhalten von Detektionssignalen und
- Auswerten der Detektionssignale durch eine Auswerteeinheit.
   Ferner wird ein zwischen dem Testelement und dem Detektor angeordneter lichtdurchlässiger Bereich durch ein Begrenzungselement begrenzt, das einen lichtundurchlässigen Bereich aufweist, wobei das Begrenzungselement relativ zu der Analyselichtquelle, der Kontrolllichtquelle und dem Detektor so positioniert ist, dass an einem in der Testelementaufnahme in einer Fehlposition in Z-Richtung angeordneten Analysebereich eines Testelements gestreutes oder reflektiertes Licht im Wesentlichen auf den lichtundurchlässigen Bereich trifft und nicht den Detektor erreicht. Die Detektionssignale des Detektors werden mit einem vorgegebenen Grenzwert verglichen, wobei bei einem Unterschreiten des Grenzwertes eine Fehlposition in Z-Richtung erkannt wird.
   Die Testelementaufnahme des Analysesystems ist dabei derjenige Teil, der während einer Analyse einer Probe auf dem Testelement das Testelement aufnimmt und als Halterung dient. Die Analyseeinheit ist ein Bestandteil des Analysesystems, das zur Analyse eines Testelements in der Testelementaufnahme dient, insbesondere eine optisch messende Anordnung, mit der die Analyse durch Bestrahlen eines Analysebereichs des Testelements und Auswertung reflektierter oder transmittierter Strahlung erfolgt.
   Das erfindungsgemäße Verfahren wird mit einem Testelement durchgeführt, das für die Analyse einer Probe vorgesehen ist und in der Testelementaufnahme angeordnet ist. Das Testelement kann dazu manuell oder automatisch in der Testelementaufnahme relativ zu der Analyseeinheit positioniert worden sein. Erfindungsgemäß wird eine Kontrolle durchgeführt, ob der Analysebereich des Testelements in der Testelementaufnahme relativ zu der Analyseeinheit in einer Analyseposition positioniert ist. Die Analyseposition ist dabei diejenige Position des Testelements in der Testelementaufnahme, die für die Durchführung einer Analyse einer Probe in dem Analysebereich des Testelements vorgesehen ist. Es ist also diejenige Position des Testelements in der Testelementaufnahme, bei der keine Fehlpositionierung des Analysebereichs in Z-Richtung, insbesondere keine Fehlpositionierung des Analysebereichs in X-, Y- und Z-Richtung, relativ zu der Analyseeinheit vorliegt.
   Der Analysebereich ist im Zusammenhang mit der vorliegenden Erfindung derjenige Bereich des Testelements, in dem die Probe analysiert wird. Vorzugsweise enthält dieser Bereich ein Reagenzsystem, das mit einem in der Probe enthaltenen Analyten reagiert und dadurch detektierbare Veränderungen hervorruft. Zur Analyse wird die Probe mit dem Analysebereich in Kontakt gebracht, wobei die Probe zum Beispiel von einem Probenaufgabeort zu dem Analysebereich hin mittels eines Kapillarspalts transportiert wird.
   Das Kontrollieren, ob der Analysebereich des Testelements in der Testelementaufnahme relativ zu der Analyseeinheit in der Analyseposition positioniert ist, umfasst erfindungsgemäß die Schritte
- Bestrahlen des Analysebereichs mit Licht mindestens einer Analyselichtquelle und einer Kontrolllichtquelle,
- Detektieren von an dem Analysebereich gestreutem oder reflektiertem Licht durch einen Detektor zum Erhalten von Detektionssignalen und
- Auswerten der Detektionssignale durch eine Auswerteeinheit.
   Lichtquellen im Sinne der Erfindung sind sowohl solche mit einem im Wesentlichen kontinuierlichen Emissionsspektrum, wie zum Beispiel Glühlampen, als auch solche, die ein sogenanntes Bandenspektrum besitzen, wie zum Beispiel Leuchtdioden. Leuchtdioden sind für eine Verwendung in einem tragbaren Analysesystem besonders gut geeignet, da sie einen relativ hohen Wirkungsgrad besitzen, was für batteriebetriebene Geräte von Bedeutung ist. Weiterhin sind Leuchtdioden für eine Reihe von Wellenlängenbereichen im sichtbaren wie auch im Infrarotbereich erhältlich. Vorzugsweise wird für die vorliegende Erfindung eine Lichtquelle eingesetzt, die den Hauptteil ihrer Strahlung in einem Wellenlängenbereich emittiert, der von dem Analysebereich, nachdem er mit Analyt reagiert hat, stark absorbiert wird. Beispielsweise können als Lichtquellen Laserdioden eingesetzt werden. Die Lichtquellen werden bei der vorliegenden Erfindung vorzugsweise nacheinander aktiviert, wobei zwischen den Zeiten, zu denen die Lichtquellen aktiviert sind, vorzugsweise eine Zeitspanne von weniger als 0,5 s liegt.
   Als Detektoren werden bei der vorliegenden Erfindung vorzugsweise im Stand der Technik bekannte Halbleiterbauelemente, wie Photodioden, Phototransistoren oder photovoltaische Elemente eingesetzt.
   Bei der vorliegenden Erfindung begrenzt ein Begrenzungselement einen lichtdurchlässigen Bereich, durch den das an dem Analysebereich gestreute oder reflektierte Licht zu dem Detektor gelangen kann. Dabei ist das Begrenzungselement relativ zu der Kontrolllichtquelle und dem Detektor so positioniert, dass bei einer Fehlpositionierung des Analysebereichs in Z-Richtung das an dem Analysebereich des Testelements gestreute oder reflektierte Licht der Lichtquelle im Wesentlichen auf den lichtundurchlässigen Bereich des Begrenzungselements trifft. Dadurch wird ein überwiegender Anteil des gestreuten oder reflektierten Lichts durch den lichtundurchlässigen Bereich so blockiert, dass er nicht auf den Detektor trifft. Daher liegen bei einer Fehlpositionierung in Z-Richtung die Detektionssignale des Detektors unter einem festgelegten Grenzwert. Durch ein Vergleichen der Detektionssignale mit mindestens einem vorgegebenen Grenzwert kann daher die Fehlposition des Analysebereichs in Z-Richtung bei einem Unterschreiten des Grenzwertes erkannt werden.
   Erfindungsgemäß erfolgt ein Detektieren von an dem Analysebereich gestreutem und/oder reflektiertem Licht durch einen Detektor zum Erhalten von Detektionssignalen. Gestreutes oder reflektiertes Licht bezieht sich im Zusammenhang mit der vorliegenden Erfindung vorzugsweise auf gestreutes oder diffus reflektiertes Licht, insbesondere auf gestreutes, diffus reflektiertes oder regelmäßig reflektiertes Licht. Reflexion ist dabei die Zurückwerfung des Lichtes bei seinem Auftreffen auf die Grenzfläche zwischen zwei Medien. Streuung ist die durch kleine Teilchen verursachte Ablenkung des Lichtes beim Durchgang durch ein Medium. Bei der diffusen Reflexion wird das (insbesondere gerichtet) auffallende Licht in viele Richtungen zerstreut zurückgestrahlt. Für regelmäßige (reguläre, gerichtete, spiegelnde) Reflexion gilt das Reflexionsgesetz. Vorzugsweise detektiert der Detektor bei dem erfindungsgemäßen Verfahren das an dem Analysebereich gestreute Licht, das an dem Analysebereich diffus reflektierte Licht oder das an dem Analysebereich gestreute und das an dem Analysebereich diffus reflektierte Licht, besonders bevorzugt das gestreute Licht, zum Kontrollieren, ob der Analysebereich in der Analyseposition positioniert ist.
   Als Begrenzungselement kann bei der vorliegenden Erfindung z.B. die lichtundurchlässige Umrahmung eines in einem optischen Analysesystem vorhandenen Optikfensters dienen.
   Vorzugsweise wird das erfindungsgemäße Verfahren bei Analysesystemen eingesetzt, bei denen eine Fehlpositionierung des Analysebereichs eines Testelements zu einer Verfälschung von Analyseergebnissen führt. Insbesondere sind dies optisch messende Systeme zur photometrischen Analyse einer Probe. Das erfindungsgemäße Verfahren wird vorzugsweise in relativ kleinen Analysesystemen eingesetzt, die von einem Patienten selbst bedient werden können. Ein solches System ist beispielsweise in der EP-B 0 618 443 beschrieben. Von besonderer Bedeutung ist die Erfindung für solche Systeme, bei denen Testelemente eingesetzt werden, die entlang ihrer Längsachse verbiegbar sind und die vom Analysegerät nur an einem Ende oder an beiden Enden gehaltert werden, zum Beispiel durch einen in eine Ausnehmung eingreifenden Zapfen und gegebenenfalls einen auf der Testelementoberfläche aufliegenden Niederhalter.
   Durch den Einsatz des Begrenzungselements wird bei der vorliegenden Erfindung in vorteilhafter Weise eine deutliche Reduzierung der an dem Analysebereich eines in Z-Richtung fehlpositionierten Testelements gestreuten oder reflektierten Lichtintensität erreicht, so dass ein Erkennen der Fehlpositionierung anhand der erhaltenen Detektionssignale mit hoher Sicherheit erkannt werden kann.
   Die Erfindung bezieht sich weiterhin auf ein Analysesystem gemäß Anspruch 8 zur Analyse einer Probe auf einem analytischen Testelement mit einer Analyseeinheit, wobei ein zu analysierendes Testelement in einer Testelementaufnahme relativ zu der Analyseeinheit positioniert ist. Das Analysesystem weist eine Kontrolleinheit zur Kontrolle, ob ein Analysebereich des Testelements in der Testelementaufnahme in einer Analyseposition relativ zu der Analyseeinheit positioniert ist, auf, wobei die Kontrolleinheit mindestens eine Analyselichtquelle und eine Kontrolllichtquelle zur Bestrahlung des Analysebereichs mit Licht, einen Detektor zur Detektion von an dem Analysebereich gestreutem oder reflektiertem Licht zum Erhalten von Detektionssignalen und eine Auswerteeinheit umfasst. Zwischen einem in der Testelementaufnahme angeordneten Testelement und dem Detektor ist ein Begrenzungselement angeordnet, das einen lichtundurchlässigen Bereich aufweist. Das Begrenzungselement ist relativ zu den Lichtquellen und dem Detektor so positioniert, dass an einem in der Testelementaufnahme in einer Fehlposition in Z-Richtung angeordneten Analysebereich eines Testelements gestreutes oder reflektiertes Licht der Kontrolllichtquelle im Wesentlichen auf den lichtundurchlässigen Bereich trifft und nicht den Detektor erreicht. Die Auswerteeinheit enthält eine Vergleichseinheit, die durch ein Vergleichen der Detektionssignale mit mindestens einem vorgegebenen Grenzwert bei einem Unterschreiten des Grenzwerts eine Fehlposition des Analysebereichs in Z-Richtung erkennt. Das erfindungsgemäße Analysesystem kann insbesondere zur Durchführung des erfindungsgemäßen Verfahrens verwendet werden.
   Die Kontrolleinheit kann der Analyseeinheit des Analysesystems entsprechen. In diesem Fall werden die mindestens eine Lichtquelle und der Detektor sowohl zur Positionskontrolle des Analysebereichs als auch zur Analyse einer Probe in dem Analysebereich verwendet. Es können aber auch getrennte Kontroll- und Analyseeinheiten in dem erfindungsgemäßen Analysesystem vorhanden sein.
   Erfindungsgemäß wird für die Detektionssignale bei einer Fehlpositionierung des Analysebereichs des Testelements in Z-Richtung ein Grenzwert für die relative Remission vorgegeben, der ein Grenzwert für die Differenz von zwei relativen Remissionen zweier Lichtquellen, nämlich der Analyselichtquelle und der Kontrolllichtquelle, ist. Die relative Remission ist dabei das Verhältnis der an dem Analysebereich des Testelements gestreuten oder reflektierten (insbesondere diffus reflektierten) und durch den Detektor detektierten Lichtintensität beim Kontrollieren, ob der Analysebereich in der Testelementaufnahme in der Analyseposition positioniert ist, zu der durch den Analysebereich eines in der Analyseposition positionierten Testelements gestreuten oder (diffus) reflektierten Lichts ohne Probe (Leerwert). Der Leerwert wird vorzugsweise am Anfang einer Messung vor Aufbringung einer Probe ermittelt (Leerwertmessung). Sollte das Testelement schon bei der Leerwertmessung in Z-Richtung dejustiert sein, kann auch diese Fehlpositionierung mittels des erfindungsgemäßen Verfahrens (z.B. in dem erfindungsgemäßen Analysesystem) erkannt werden.
   Gemäß einer bevorzugten Ausführungsform der vorliegenden Erfindung umfasst das Analysieren einer Probe auf einem in der Testelementaufnahme in der Analyseposition positionierten Testelements die Schritte
- Bestrahlen des Analysebereichs mit Licht mindestens einer Analyselichtquelle,
- Detektieren von an dem Analysebereich gestreutem oder reflektiertem Licht durch einen Detektor zum Erhalten von Detektionssignalen und
- Auswerten der Detektionssignale durch eine Auswerteeinheit zum Erhalten von Analyseergebnissen.

Diese Analyse wird durch die Analyseeinheit des erfindungsgemäßen Analysesystems durchgeführt. Es handelt sich dabei um eine photometrische Analyse, die darauf beruht, dass die Lichtintensität von an dem Analysebereich gestreutem oder reflektiertem (insbesondere gestreutem oder diffus reflektiertem) Licht durch die Reaktion eines Analyten in der Probe mit einer in dem Analysebereich enthaltenen Reagenz eine messbare Veränderung in Abhängigkeit von der Konzentration des Analyten in der Probe erfährt. Die Lichtquelle, die zum Analysieren der Probe verwendet wird, kann dabei dieselbe Lichtquelle sein, die zum Kontrollieren der Positionierung des Testelements verwendet wird. Es kann jedoch auch eine zusätzliche Lichtquelle vorhanden sein, die zum Analysieren der Probe verwendet wird. Die Detektionssignale ergeben sich aus an dem Analysebereich gestreutem oder (diffus) reflektierter Strahlung, die durch den lichtdurchlässigen Bereich des Begrenzungselements zu dem Detektor gelangt, falls das Testelement in der korrekten Analyseposition in der Testelementaufnahme des Analysesystems positioniert ist.

Vorzugsweise wird zum Kontrollieren, ob der Analysebereich des Testelements in der Analyseposition positioniert ist, und zum Analysieren der Probe derselbe Detektor verwendet.

Gemäß einer bevorzugten Ausführungsform der vorliegenden Erfindung umfasst das Analysieren einer Probe die Schritte
a) Kontrollieren, ob der Analysebereich des Testelements in der Analyseposition positioniert ist,
b) Inkontaktbringen der Probe mit dem Analysebereich zum Erhalten einer photometrisch detektierbaren Veränderung des Analysebereichs,
c) Aktivieren einer ersten Analyselichtquelle der Analyseeinheit zum Bestrahlen einer ersten Zone des Analysebereichs und Detektieren des von dem Analysebereich gestreuten oder reflektierten Lichts zum Erhalten von ersten Analysesignalen,
d) Aktivieren einer zweiten Analyselichtquelle der Analyseeinheit zum Bestrahlen einer gegenüber der ersten Zone versetzt angeordneten zweiten Zone des Analysebereichs und Detektieren des von dem Analysebereich gestreuten oder reflektierten Lichts zum Erhalten von zweiten Analysesignalen,
e) Vergleichen der ersten und zweiten Analysesignale durch die Auswerteeinheit zum Erhalten von Vergleichsergebnissen und Auswählen der ersten oder der zweiten Analysesignale anhand der Vergleichsergebnisse zum Ermitteln einer in der Probe enthaltenen Analytkonzentration durch Auswerten der ausgewählten ersten oder zweiten Analysesignale.

Dieses Verfahren umfasst vorzugsweise einen weiteren Schritt,
a0) Einbringen eines Testelements in die Testelementaufnahme,
   der vor dem Schritt a) manuell oder automatisch durchgeführt werden kann.

Die Reihenfolge der Schritte ist bei diesem Verfahren nicht auf diese Reihenfolge festgelegt. Schritt a) kann zum Beispiel auch zu einem späteren Zeitpunkt erfolgen. Ferner kann dieser Schritt auch mehrfach durchgeführt werden. Schritt b) kann auch vor Schritt a0) oder vor Schritt a) erfolgen.

Die zwei durch die zwei Analyselichtquellen bestrahlten Zonen des Analysebereichs können teilweise überlappend oder getrennt voneinander in dem Analysebereich angeordnet sein. Beispielsweise werden nebeneinander in Y-Richtung liegende Zonen des Analysebereichs durch die beiden Analyselichtquellen beleuchtet. Das mit Hilfe der zwei Analyselichtquellen durchgeführte Verfahren dient dazu, diejenige Zone in dem Analysebereich auszuwählen, die besser für ein Auswerten der Analytkonzentration in der Probe geeignet ist.

Beispielsweise wird dasjenige Analysesignal für die Analyse der Probe ausgewählt, das stärker durch die photometrisch detektierbare Veränderung des Analysebereichs abgeschwächt wurde. Dieses Verfahren wird angewendet, um sicherzustellen, dass das Analyseergebnis aus Signalen gewonnen wird, die von einer vollständig auf dem Analysebereich liegenden Zone herrühren. Ein solches Verfahren ist zum Beispiel in der WO 00/19185 A1 beschrieben, auf die die vorliegende Erfindung ausdrücklich Bezug nimmt.

Gemäß einer bevorzugten Ausführungsform der vorliegenden Erfindung umfasst das erfindungsgemäße Verfahren die Schritte
i) Aufgeben einer Probe auf einen Probenaufgabeort eines Testelements,
ii) Aktivieren mindestens einer Analyselichtquelle zum Bestrahlen eines ersten Teilbereichs des Analysebereichs und Detektieren des von dem Analysebereich gestreuten oder reflektierten Lichts mit einem Detektor zum Erhalten eines ersten Detektionssignals,
iii) Aktivieren einer Kontrolllichtquelle zum Bestrahlen eines zweiten Teilbereichs des Analysebereichs, wobei der zweite Teilbereich vorzugsweise weiter von dem Probenaufgabeort entfernt ist als der erste Teilbereich, und Detektieren des von dem Analysebereich gestreuten oder reflektierten Lichts mit einem Detektor zum Erhalten eines zweiten Detektionssignals,
iv) Vergleichen eines ermittelten Differenzwertes aus dem zweiten minus dem ersten Detektionssignal mit einem vorgegebenen ersten Differenzwert durch die Auswerteeinheit zum Erkennen einer Unterdosierung der Probe bei Überschreiten des vorgegebenen ersten Differenzwertes.

Die Schritte iii) und ii) können selbstverständlich auch in der umgekehrten Reihenfolge durchgeführt werden. Ein solches Verfahren zum Erkennen einer Unterdosierung der Probe wird beispielsweise in der EP 0 819 943 A2 beschrieben, auf die die vorliegende Erfindung hiermit ausdrücklich Bezug nimmt. Bei dem ersten und dem zweiten Teilbereich handelt es sich um voneinander getrennte oder zumindest nicht vollständig überlappende Teilbereiche des Analysebereichs.

Eine Probe verteilt sich nach dem Aufgeben auf den Probenaufgabeort in dem Analysebereich so, dass sie vorzugsweise zunächst den ersten Teilbereich des Analysebereichs und dann den zweiten Teilbereich des Analysebereichs erreicht. Bei einer Unterdosierung erreicht die Probe den zweiten Teilbereich des Analysebereichs zum Beispiel gar nicht oder nur teilweise, so dass sich ein Differenzwert aus dem zweiten minus dem ersten Detektionssignal ergibt, der einen vorgegebenen ersten Differenzwert überschreitet. Dies ergibt sich daraus, dass in dem zweiten Teilbereich das Streuungs- oder Reflexionsvermögen durch die Probe nicht in dem Maße reduziert wird, wie dies im ersten Teilbereich der Fall ist. Wird auf ein Testelement eine zu geringe Probenmenge aufgegeben, so führt dies zu einer starken Verfälschung des Analyseergebnisses, da bei der Auswertung stets davon ausgegangen wird, dass der Analysebereich ausreichend mit einer bestimmten Menge an Probe bedeckt ist.

Das erfindungsgemäße Verfahren umfasst die Schritte
i) Aufgeben einer Probe auf einen Probenaufgabeort eines Testelements,
ii) Aktivieren mindestens einer Analyselichtquelle zum Bestrahlen eines ersten Teilbereichs des Analysebereichs und Detektieren des von dem Analysebereich gestreuten oder reflektierten Lichts mit einem Detektor zum Erhalten eines ersten Detektionssignals,
iii) Aktivieren einer Kontrolllichtquelle zum Bestrahlen eines zweiten Teilbereichs des Analysebereichs, wobei der zweite Teilbereich vorzugsweise weiter von dem Probenaufgabeort entfernt ist als der erste Teilbereich, und Detektieren des von dem Analysebereich gestreuten oder reflektierten Lichts mit einem Detektor zum Erhalten eines zweiten Detektionssignals.
iv) Vergleichen eines ermittelten Differenzwertes aus dem zweiten minus dem ersten Detektionssignal mit einem vorgegebenen zweiten Differenzwert zum Erkennen einer Fehlposition des Analysebereichs in Z-Richtung in der Testelementaufnahme.

Die Schritte iii) und ii) können auch in der umgekehrten Reihenfolge durchgeführt werden. Bei diesem Verfahren, das allein oder in Kombination mit der oben beschriebenen Unterdosierungskontrolle erfolgen kann, werden das erste und das zweite Detektionssignal durch die Auswerteeinheit zum Erkennen einer Fehlposition des Analysebereichs in Z-Richtung in der Testelementaufnahme verglichen. Eine solche Fehlposition wird bei Unterschreiten eines vorgegebenen zweiten Differenzwertes aus dem zweiten minus dem ersten Detektionssignal erkannt. Dabei ist das Begrenzungselement so positioniert, dass an einem in einer Fehlposition in Z-Richtung angeordneten Analysebereich gestreutes oder reflektiertes Licht der Kontrolllichtquelle im Wesentlichen auf den lichtundurchlässigen Bereich des Begrenzungselements trifft, und das an einem in der Fehlposition in Z-Richtung angeordneten Analysebereich gestreute oder reflektierte Licht der Analyselichtquelle im Wesentlichen auf den lichtdurchlässigen Bereich des Begrenzungselements trifft. Dadurch wird bei einer Fehlpositionierung des Analysebereichs des Testelements in Z-Richtung das an dem Analysebereich gestreute oder reflektierte Licht der Kontrolllichtquelle durch den lichtundurchlässigen Bereich so blockiert, dass es den Detektor nicht erreicht. Das an dem Analysebereich gestreute oder reflektierte Licht der Analyselichtquelle trifft hingegen trotz der Fehlpositionierung in Z-Richtung im Wesentlichen auf den lichtdurchlässigen Bereich des Begrenzungselements und gelangt durch diesen hindurch zu dem Detektor hin. Daraus folgt, dass das zweite Detektionssignal abnimmt, während das erste Detektionssignal durch die Fehlpositionierung nahezu unverändert bleibt, so dass der vorgegebene zweite Differenzwert aus dem zweiten minus dem ersten Detektionssignal durch den ermittelten Differenzwert unterschritten wird, woraus die Fehlposition des Analysebereichs in Z-Richtung erkannt werden kann. Der Vorteil dieses Verfahrens ist, dass die gegebenenfalls bereits für die Unterdosierungserkennung vorhandenen Analyse- und Kontrolllichtquellen und die aus der Bestrahlung der zwei Teilbereiche mit diesen Lichtquellen resultierenden Detektionssignale des Detektors nicht nur für eine Unterdosierungskontrolle, sondern auch für die Kontrolle der Position des Analysebereichs in Z-Richtung verwendet werden können. Es ist daher lediglich die entsprechende Programmierung einer Vergleichseinheit der Auswerteeinheit erforderlich, so dass ein Vergleich der Detektionssignaldifferenz mit dem vorgegebenen zweiten Differenzwert (zusätzlich oder alternativ zu dem Vergleich der Detektionssignaldifferenz mit dem vorgegebenen ersten Differenzwert) erfolgt.

Bei der vorliegenden Erfindung werden die mindestens eine Analyselichtquelle und die Kontrolllichtquelle vorzugsweise sequentiell aktiviert. Ferner kann die Kontrolllichtquelle zur Erkennung der Anwesenheit einer Probe in dem Analysebereich verwendet werden, wozu ein Aktivieren der Kontrolllichtquelle zum Bestrahlen des zweiten Bereichs und ein Detektieren einer Veränderung des von dem zweiten Bereich gestreuten oder reflektierten Lichts (gegenüber dem Leerwert) möglich ist. Sobald die Anwesenheit der Probe auf diese Weise in dem Analysebereich erkannt wurde, können bei dem verwendeten Analysesystem verschiedene Messungen zum Beispiel zur Kontrolle der korrekten Positionierung des Testelements, zur Analyse der Probe und/oder zur Unterdosierungskontrolle automatisch ausgelöst werden.

Gemäß einer bevorzugten Ausführungsform der vorliegenden Erfindung enthält das erfindungsgemäße Verfahren einen oder mehrere der folgenden Schritte:
1. Leerwertmessung (Detektieren des an dem Analysebereich gestreuten oder reflektierten Lichts einer ersten Analyselichtquelle, einer zweiten Analyselichtquelle und/oder einer Kontrolllichtquelle, wobei keine Probe auf dem Testelement vorhanden ist).
2. Benetzungserkennung (Detektieren einer Veränderung des von dem Analysebereich gestreuten oder reflektierten Lichts einer Kontrolllichtquelle zur Erkennung der Anwesenheit einer Probe).
3. Wartezeit (Abwarten einer bestimmten Zeitspanne zum Sicherstellen einer Verteilung der Probe in dem Analysebereich nach dem Erkennen der Anwesenheit einer Probe).
4. Kinetikmessung (Detektieren des von dem Analysebereich gestreuten oder reflektierten Lichts der ersten Analyselichtquelle und/oder der zweiten Analyselichtquelle während der Reaktion eines Analyten aus der Probe mit in dem Analysebereich enthaltenen Reagenzien).
5. Gegebenenfalls Auswahl der Analysesignale einer der ersten oder zweiten Analyselichtquellen (die Analysesignale, die sich aus dem detektierten, an dem Analysebereich gestreuten oder reflektierten Licht der ausgewählten Analyselichtquelle ergeben, werden zur Analyse der Probe, insbesondere zum Ermitteln einer in der Probe enthaltenen Analytkonzentration, herangezogen).
6. Unterdosierungskontrolle (durch Vergleichen des ersten und zweiten Detektionssignals, die sich aus dem gestreuten oder reflektierten Licht der Analyselichtquelle bzw. der Kontrolllichtquelle ergeben, wird bei Überschreiten eines vorgegebenen ersten Differenzwertes aus dem zweiten minus dem ersten Detektionssignal eine Unterdosierung der Probe erkannt).
7. Kontrolle der Positionierung des Analysebereichs des Testelements in Z-Richtung in der Testelementaufnahme (Vergleichen des ersten und zweiten Detektionssignals, die sich aus dem gestreuten oder reflektierten Licht der Analyselichtquelle bzw. der Kontrolllichtquelle ergeben, mit einem zweiten Differenzwert zum Erkennen einer Fehlposition des Analysebereichs in Z-Richtung, falls der vorgegebene zweite Differenzwert unterschritten wird).

Die Reihenfolge der sieben beschriebenen Schritte dieses Verfahrens kann dabei verändert werden. Beispielsweise kann der Positionskontrollschritt 7. nach dem Leerwertmessungsschritt 1., nach dem Benetzungserkennungsschritt 2., nach dem Warteschritt 3., nach dem Kinetikmessungsschritt 4., nach dem Auswahlschritt 5., nach dem Unterdosierungskontrollschritt 6. oder nach mehreren dieser Schritte durchgeführt werden.

Die Kinetikmessung wird dazu verwendet, damit erkannt werden kann, wann eine Reaktion des in der Probe enthaltenen Analyten mit den in dem Analysebereich enthaltenen Reagenzien abgeschlossen ist. Als Abbruchkriterium wird dabei eine hinreichende Stabilität der Detektionswerte des Detektors definiert.

Die Erfindung bezieht sich weiterhin auf ein Analysesystem umfassend eine Analyselichtquelle zum Bestrahlen eines ersten Teilbereichs des Analysebereichs eines Testelements in der Testelementaufnahme, eine Kontrolllichtquelle zum Bestrahlen eines zweiten Teilbereichs des Analysebereichs des Testelements, wobei der zweite Teilbereich vorzugsweise weiter von einem Probenaufgabeort des Testelements entfernt ist als der erste Teilbereich, und mindestens einen Detektor zum Detektieren des von dem Analysebereich gestreuten oder reflektierten Lichts der Analyselichtquelle und der Kontrolllichtquelle zum Erhalten eines ersten bzw. eines zweiten Detektionssignals, wobei das Begrenzungselement so positioniert ist, dass an einem in einer Fehlposition in Z-Richtung angeordneten Analysebereich gestreutes oder reflektiertes Licht der Kontrolllichtquelle im Wesentlichen auf den lichtundurchlässigen Bereich des Begrenzungselements trifft und das an einem in der Fehlposition in Z-Richtung angeordneten Analysebereich gestreutes oder reflektiertes Licht der Analyselichtquelle im Wesentlichen auf den lichtdurchlässigen Bereich des Begrenzungselements trifft, wobei die Auswerteeinheit eine Vergleichseinheit enthält, die bei einem Unterschreiten eines vorgegebenen Differenzwertes durch einen ermittelten Differenzwert aus dem zweiten minus dem ersten Detektionssignal eine Fehlposition des Analysebereichs in Z-Richtung in der Testelementaufnahme erkennt. Eine entsprechende Anordnung des Begrenzungselements wird durch eine Abstimmung des Verlaufs der Grenze des lichtdurchlässigen zu dem lichtundurchlässigen Bereich u.a. auf den Abstand der beleuchteten Teilbereiche des Analysebereichs und auf die maximal mögliche Fehlpositionierung in Z-Richtung erreicht werden.

Wird mittels des erfindungsgemäßen Verfahrens oder durch das erfindungsgemäße Analysesystem eine Fehlpositionierung des Analysebereichs eines Testelements in Z-Richtung in der Testelementaufnahme erkannt, so gibt das Analysesystem vorzugsweise eine optische, akustische oder haptische Fehlermeldung aus, so dass ein Benutzer die Fehlpositionierung beseitigen kann.

Anhand der Zeichnung wird die Erfindung nachstehend näher erläutert.

Es zeigt
- Figur 1: ein Testelement zur Verwendung in dem erfindungsgemäßen Verfahren oder in dem erfindungsgemäßen Analysesystem,
- Figur 2A: ein Analysesystem mit einem in Analyseposition positionierten Analysebereich eines Testelements,
- Figur 2B: das Analysesystem gemäß Figur 2A mit einem in Z-Richtung fehlpositionierten Analysebereich eines durchgebogenen Testelements,
- Figur 3: eine Graphik mit Differenzwerten der relativen Remission des Lichts einer Analyselichtquelle und einer Kontrolllichtquelle und
- Figur 4: schematisch die Anordnung eines Begrenzungselements bei dem erfindungsgemäßen Verfahren und dem erfindungsgemäßen Analysesystem.

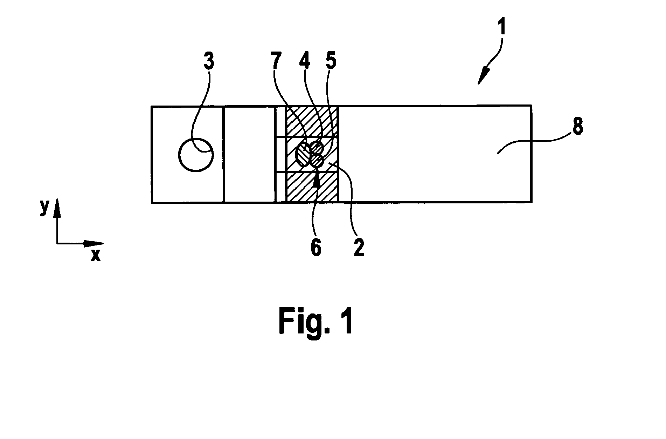

Figur 1 zeigt ein streifenförmiges Testelement, das für das erfindungsgemäße Verfahren oder das erfindungsgemäße Analysesystem verwendet werden kann.

Das Testelement 1 enthält einen Analysebereich 2, der zur Analyse einer Probe dient. Ferner enthält das Testelement 1 eine Ausnehmung 3, in die ein Zapfen eines Analysesystems eingreifen kann, um das Testelement 1 in X-Richtung und Y-Richtung in der Testelementaufnahme des Analysesystems zu positionieren und zu fixieren.

In den Analysebereich 2 des Testelements 1 ist eine erste Zone 4 eingezeichnet, die durch eine erste Analyselichtquelle (LED 1A) beleuchtet wird. Weiterhin ist eine zweite Zone 5 in dem Analysebereich markiert, die mit dem Licht einer zweiten Analyselichtquelle (LED 1B)bestrahlt wird. Die erste Zone 4 und die zweite Zone 5 sind nebeneinander in Y-Richtung des Testelements 1 angeordnet. Die erste Zone 4 oder die zweite Zone 5 stellen einen ersten Teilbereich 6 des Analysebereichs dar. Ferner wird ein zweiter Teilbereich 7 des Analysebereichs 2 durch eine Kontrolllichtquelle (LED 2) beleuchtet. Der zweite Teilbereich 7 ist von einem Probenaufgabeort 8 weiter entfernt als der erste Teilbereich 6. Nach dem Aufgeben einer Probe auf den Probenaufgabeort 8 wird diese, vorzugsweise durch einen (nicht dargestellten) Kapillarspalt zu dem Analysebereich 2 hintransportiert. Die Probe erreicht daher zuerst den ersten Teilbereich 6 des Analysebereichs, der durch die erste Zone 4 oder die zweite Zone 5 gebildet wird. Dann erreicht die Probe den zweiten Teilbereich 7, der durch die Kontrolllichtquelle bestrahlt wird. Sobald die Probe den zweiten Teilbereich 7 erreicht, ändert sich dessen Steuungs- oder Reflexionsvermögen, so dass bei einem Bestrahlen des zweiten Teilbereichs 7 mit Licht der Kontrolllichtquelle eine Veränderung der Intensität des von dem zweiten Teilbereich 7 gestreuten oder reflektierten Lichts detektiert wird, so dass die Anwesenheit der Probe in dem zweiten Teilbereich 7 und damit in dem Analysebereich 2 anhand der Veränderung des Detektionssignals erkannt werden kann.

Zum Erkennen einer Fehlpositionierung des Analysebereichs 2 dieses Testelements 1 in Z-Richtung in der Testelementaufnahme eines Analysesystems wird zum Beispiel eine der zwei Analyselichtquellen zum Bestrahlen der ersten Zone 4 oder der zweiten Zone 5 in dem ersten Teilbereich 6 des Analysebereichs 2 aktiviert und das von dem Analysebereich 2 gestreute oder reflektierte Licht mit einem Detektor detektiert, um ein erstes Detektionssignal zu erhalten. Dann wird eine Kontrolllichtquelle zum Bestrahlen des zweiten Teilbereichs 7 des Analysebereichs 2 aktiviert und das von dem Analysebereich 2 gestreute oder reflektierte Licht mit einem Detektor, gegebenenfalls mit demselben Detektor, zum Erhalten eines zweiten Detektionssignals detektiert. Das erste und das zweite Detektionssignal werden anschließend verglichen, wobei ein Differenzwert aus dem zweiten minus dem ersten Detektionssignal ermittelt wird. Dies erfolgt in einer Auswerteeinheit des Analysesystems. Bei dem Unterschreiten eines vorgegebenen zweiten Differenzwertes durch diesen ermittelten Differenzwert wird eine Fehlposition des Analysebereichs 2 in Z-Richtung (senkrecht zur Bildebene) erkannt. Dies folgt daraus, dass ein Begrenzungselement so positioniert ist, dass an einem in einer Fehlposition in Z-Richtung angeordneten Analysebereich gestreutes oder reflektiertes Licht der Kontrolllichtquelle im Wesentlichen auf den lichtundurchlässigen Bereich des Begrenzungselements trifft und das an einem in der Fehlposition in Z-Richtung angeordneten Analysebereich 2 gestreute oder reflektierte Licht der Analyselichtquelle im Wesentlichen auf den lichtdurchlässigen Bereich des Begrenzungselements trifft. Daher wird das in dem zweiten Teilbereich 7 gestreute oder reflektierte Licht der Kontrolllichtquelle durch den lichtundurchlässigen Bereich des Begrenzungselements von dem Detektor abgeblockt und das in dem ersten Teilbereich 6 gestreute oder reflektierte Licht der Analyselichtquelle durch den lichtdurchlässigen Bereich des Begrenzungselements gestreut oder (vorzugsweise diffus) auf den Detektor reflektiert. Dadurch ergibt sich ein stark reduziertes zweites Detektionssignal und ein weitgehend konstantes erstes Detektionssignal, so dass der Differenzwert aus dem zweiten minus dem ersten Detektionssignal den vorgegebenen zweiten Differenzwert unterschreitet. Somit wird die Fehlposition des Analysebereichs 2 des Testelements 1 in Z-Richtung durch diesen Vergleich erkannt.

Beim Überschreiten eines vorgegebenen ersten Differenzwertes durch die Differenz aus dem zweiten minus dem ersten Detektionssignal wird hingegen eine Unterdosierung der Probe erkannt, da in diesem Fall das zweite Detektionssignal höher als das erste Detektionssignal ausfällt.

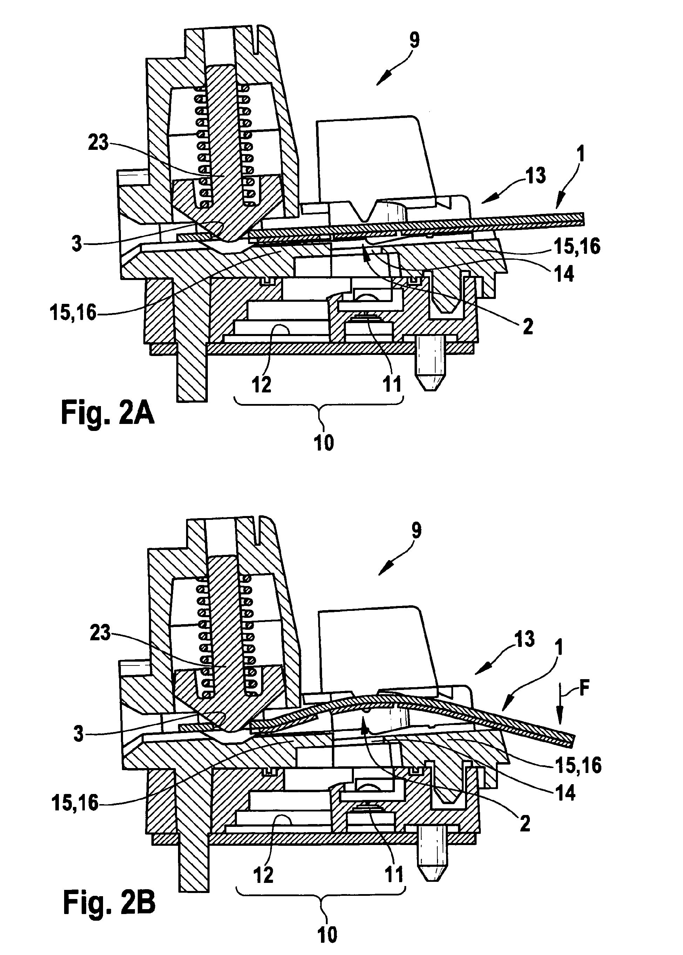

Figur 2A zeigt ein Analysesystem mit einem in Analyseposition positionierten Analysebereich eines Testelements.

Das Analysesystem 9 weist eine Analyseeinheit 10 auf, die eine Lichtquelle 11 und einen Detektor 12 umfasst. In eine Testelementaufnahme 13 ist ein Testelement 1 eingeschoben, dass durch einen Zapfen 23 in X-Richtung und Y-Richtung positioniert und fixiert wird, der in eine Ausnehmung 3 des Testelements 1 eingreift. In Figur 2A befindet sich das Testelement 1 in der Analyseposition. In dieser Position ist das Testelement 1, und insbesondere sein Analysebereich 2, in Z-Richtung korrekt relativ zu der Analyseeinheit 10 positioniert. Das Licht der Lichtquelle 11 gelangt durch einen lichtdurchlässigen Bereich 14 eines Begrenzungselements 15 zu dem Analysebereich 2 des Testelements 1. Der lichtdurchlässige Bereich 14 ist dabei ein Fenster, das durch einen lichtundurchlässigen Bereich 16 des Begrenzungselements 15 umrahmt wird. Das Licht der Lichtquelle 11 wird an dem Analysebereich 2 des Testelements 1 gestreut oder reflektiert und tritt erneut durch den lichtdurchlässigen Bereich 14 des Begrenzungselements 15 hindurch und zumindest ein Anteil des gestreuten oder (vorzugsweise diffus) reflektierten Lichts trifft dann auf den Detektor 12 zum Erzeugen eines Detektionssignals.

Das in Figur 2B dargestellte Analysesystem umfasst dieselben Bestandteile wie das in Figur 2A dargestellte Analysesystem, die mit den gleichen Bezugszeichen bezeichnet sind.

Aufgrund einer Krafteinwirkung F ist das Testelement 1 jedoch durchgebogen, so dass sich eine Fehlpositionierung des Analysebereichs 2 in Z-Richtung ergibt. Dadurch wird das von der Lichtquelle 11 emittierte und durch den lichtdurchlässigen Bereich 14 des Begrenzungselements 15 hindurchtretende Licht an dem Analysebereich 2 gestreut oder (vorzugsweise diffus) reflektiert, wobei das gestreute oder reflektierte Licht jedoch aufgrund des lichtundurchlässigen Bereichs 16 des Begrenzungselements 15 nun nicht mehr den Detektor 12 erreichen kann. Ein Vergleichen der Detektionssignale des Detektors 12 ergibt daher ein Unterschreiten eines Grenzwertes, so dass die Fehlpositionierung des Analysebereichs 2 in Z-Richtung erkannt werden kann.

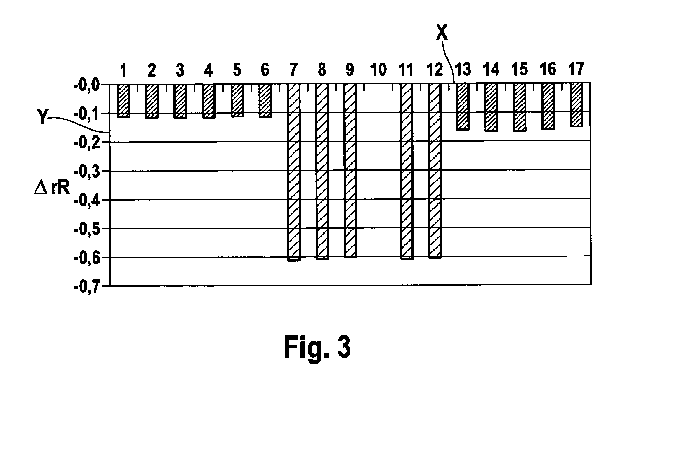

Figur 3 zeigt einen Graphen mit Differenzwerten aus dem zweiten minus dem ersten Detektionssignal, die beim Bestrahlen eines zweiten Teilbereichs des Analysebereichs mit einer Kontrolllichtquelle bzw. eines ersten Teilbereichs des Analysebereichs mit einer Analyselichtquelle detektiert werden.

Auf der Y-Achse ist dabei die Differenz der relativen Remissionen aufgetragen, auf der X-Achse die Nummer der Messung. Es sind Messungen ohne Probe (Leerwertmessungen), mit gebogenem Teststreifen und Messungen mit Probe dargestellt. Die Messungen 1 bis 6 zeigen die Differenz der relativen Remissionen [ΔrR = rR(LED 2)- rR(LED 1) = rR(Kontrolllichtquelle)-rR(Analyselichtquelle)], die bei einem in Analyseposition korrekt positionierten Testelement ohne Probe gemessen wurden (Leerwertmessungen). Dabei ist erkennbar, dass die relative Remission der LED 2 etwas kleiner als die relative Remission der LED 1 ist, so dass sich eine Differenz der relativen Remission von ca. - 0,12 ergibt. Diese Differenz ergibt sich u.a. aus den unterschiedlichen optischen Wegen und aus den verschiedenen Wellenlängen des Lichts der beiden Lichtquellen.

Bei einer Biegung des Teststreifens (Messungen 7 bis 9 und 11 bis 12) ist die relative Remission der LED 2 stark reduziert, da ihre an dem Analysebereich des Testelements gestreute oder reflektierte Strahlung durch das Begrenzungselement zum Detektor hin blockiert ist. Die relative Remission der LED 1 wird durch die Biegung des Teststreifens hingegen kaum beeinflusst. Daher nimmt die Differenz der relativen Remissionen stark ab auf ca. - 0,6. Eine Fehlpositionierung des Analysebereichs dieses Testelements in Z-Richtung kann daher erkannt werden, wenn diese Differenz der relativen Remissionen zum Beispiel mit einem Differenzwert von - 0,3 verglichen wird, der durch dieses gemessene Differenzsignal unterschritten wird.

Bei der Messung 10 war der Teststreifen so stark verbogen, dass er die mechanische Fixierung durch den Zapfen in dem Analysesystem verlassen hat und das Analysesystem durch eine damit verbundene Öffnung eines Optikschalters einen Fehler erkannte und daher keine Messung stattfand.

In den Messungen 13 bis 17 enthielt der Analysebereich des Testelements eine Probe, die die Differenz der relativen Remissionen in Abhängigkeit von der Konzentration eines darin enthaltenen Analyten beeinflusste. Aufgrund der Konzentrationsabhängigkeit beträgt die Differenz der relativen Remissionen nun ca. - 0,17. Diese Differenzwerte unterscheiden sich jedoch weiterhin klar von den aus einer Biegung des Teststreifens reduzierten Differenzwerten.

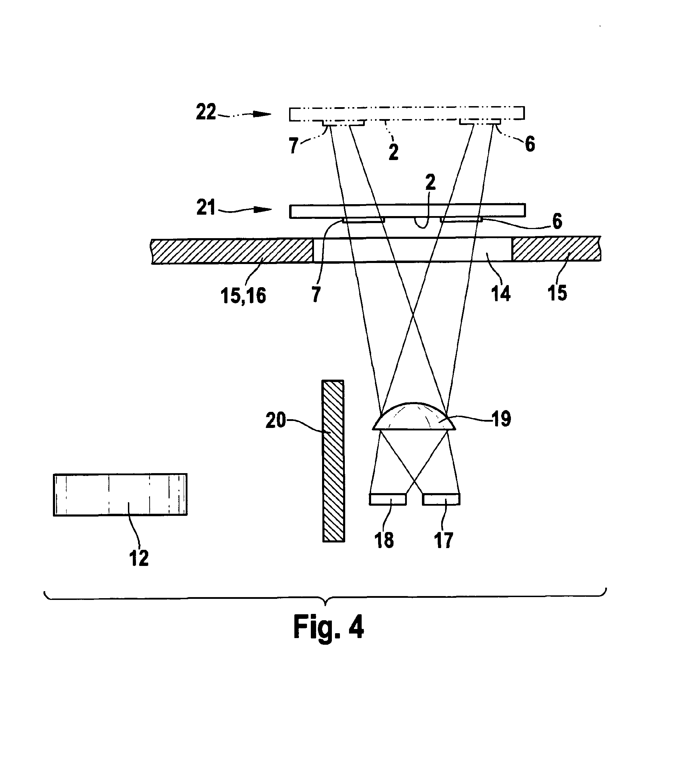

Figur 4 zeigt schematisch die Anordnung eines Begrenzungselements in einem erfindungsgemäßen Analysesystem.

Das Analysesystem enthält dabei eine Kontrolllichtquelle 17 und eine Analyselichtquelle 18, deren Licht durch eine Linse 19 und durch den lichtdurchlässigen Bereich 14 eines Begrenzungselements 15 hindurch auf den Analysebereich 2 eines Testelements 1 trifft. Eine Blende 20 ist zwischen den beiden Lichtquellen 17, 18 und einem Detektor angeordnet, um eine direkte Lichteinstrahlung von den Lichtquellen 17, 18 auf den Detektor 12 zu vermeiden. Bei einem korrekt in der Testelementaufnahme eines Analysesystems positionierten Analysebereich 21 trifft das Licht der Analyselichtquelle 18 auf einen ersten Teilbereich 6 des Analysebereichs 2, wird dort gestreut oder (vorzugsweise diffus) reflektiert und erreicht teilweise den Detektor 12. Das Licht der Kontrolllichtquelle 17 trifft auf einen zweiten Teilbereich 7 des Analysebereichs 2, wird dort gestreut oder (vorzugsweise diffus) reflektiert und trifft ebenfalls teilweise auf den Detektor 12. Die Differenz der sich daraus ergebenden Detektionssignale liegt daher über einem vorgegebenen zweiten Differenzwert. Bei einem Testelement mit einem Analysebereich in einer Fehlposition in Z-Richtung 22 trifft das Licht der Analyselichtquelle 18 auf einen ersten Teilbereich 6, wird dort gestreut oder (vorzugsweise diffus) reflektiert und gelangt teilweise zu dem Detektor 12. Das Licht der Kontrolllichtquelle 17 trifft auf einen zweiten Teilbereich 7 des Analysebereichs in Fehlposition 22, wird dort gestreut oder (vorzugsweise diffus) reflektiert und gelangt jedoch nicht zu dem Detektor 12, da der lichtundurchlässige Bereich 16 des Begrenzungselements 15 dies verhindert. Die Differenz der zwei Detektionssignale liegt daher unter einem vorgegebenen zweiten Differenzwert, so dass eine Fehlpositionierung des Analysebereichs 22 erkannt wird.

### Bezugszeichenliste

- 1: Testelement
- 2: Analysebereich
- 3: Ausnehmung
- 4: erste Zone
- 5: zweite Zone
- 6: erster Teilbereich
- 7: zweiter Teilbereich
- 8: Probenaufgabeort
- 9: Analysesystem
- 10: Analyseeinheit/Kontrolleinheit
- 11: Lichtquelle
- 12: Detektor
- 13: Testelementaufnahme
- 14: lichtdurchlässiger Bereich
- 15: Begrenzungselement
- 16: lichtundurchlässiger Bereich
- 17: Kontrolllichtquelle
- 18: Analyselichtquelle
- 19: Linse
- 20: Blende
- 21: korrekt positionierter Analysebereich
- 22: Analysebereich in Fehlposition
- 23: Zapfen

## Patentansprüche

1. Verfahren zum Analysieren einer Probe auf einem Testelement (1) in einem Analysesystem (9) mit einer Testelementaufnahme (13) und einer Analyseeinheit (10), umfassend ein Kontrollieren, ob ein Analysebereich (2) des Testelements in der Testelementaufnahme relativ zu der Analyseeinheit in einer Analyseposition positioniert ist, wobei eine Richtung senkrecht zum Analysebereich (2) eine Z-Richtung definiert, wobei das Kontrollieren die Schritte
. Bestrahlen des Analysebereichs (2) mit Licht mindestens einer Analyselichtquelle (18) und einer Kontrolllichtquelle (17),
. Detektieren von an dem Analysebereich (2) gestreutem oder reflektiertem Licht der Analyselichtquelle (18) und der Kontrolllichtquelle (17) durch einen Detektor (12) zum Erhalten eines ersten bzw. zweiten Detektionssignals und
. Auswerten der Detektionssignale durch eine Auswerteeinheit, umfasst,
wobei ein zwischen dem Testelement (1) und dem Detektor (12) angeordneter lichtdurchlässiger Bereich (14) durch ein Begrenzungselement (15), das einen lichtundurchlässigen Bereich (16) aufweist, begrenzt wird, wobei das Begrenzungselement (15) relativ zur Analyselichtquelle (18), zur Kontrolllichtquelle (17) und zum Detektor (12) so positioniert ist, dass an einem in der Testelementaufnahme (13) in einer Fehlposition in Z-Richtung angeordneten Analysebereich (22) eines Testelements (1) gestreutes oder reflektiertes Licht der Kontrolllichtquelle (17) im Wesentlichen auf den lichtundurchlässigen Bereich (16) trifft und nicht den Detektor erreicht und an einem in der Testelementaufnahme (13) in einer Fehlposition in Z-Richtung angeordneten Analysebereich (22) eines Testelements (1) gestreutes oder reflektiertes Licht der Analyselichtquelle (18) im Wesentlichen auf den lichtdurchlässigen Bereich (14) trifft,
wobei das Verfahren folgende Schritte umfasst:
i) Aufgeben der Probe auf einen Probenaufgabeort (8) des Testelements (1),
ii) Aktivieren der Analyselichtquelle (18) zum Bestrahlen eines ersten Teilbereichs (6) des Analysebereichs (2) und Detektieren des von dem Analysebereich (2) gestreuten oder reflektierten Lichts mit dem Detektor (12) zum Erhalten eines ersten Detektionssignals,
iii) Aktivieren der Kontrolllichtquelle (17) zum Bestrahlen eines zweiten Teilbereichs (7) des Analysebereichs (2) und Detektieren des von dem Analysebereich (2) gestreuten oder reflektierten Lichts mit einem Detektor (12) zum Erhalten eines zweiten Detektionssignals,
iv) Vergleichen eines ermittelten Differenzwertes aus dem zweiten minus dem ersten Detektionssignal mit einem vorgegebenen Grenzwert durch die Auswerteeinheit zum Erkennen einer Fehlposition des Analysebereichs (2) in Z-Richtung in der Testelementaufnahme (13) bei Unterschreiten des vorgegebenen Grenzwerts, wobei der Grenzwert ein Grenzwert für die Differenz zweier relativer Remissionen der Analyselichtquelle (18) und der Kontrolllichtquelle (17) ist, wobei die relative Remission das Verhältnis der an dem Analysebereich (2) des Testelements (1) gestreuten oder reflektierten und durch den Detektor (12) detektierten Lichtintensität beim Kontrollieren, ob der Analysebereich (2) in der Testelementaufnahme (13) in der Analyseposition positioniert ist, zu der durch den Analysebereich (2) eines in der Analyseposition positionierten Testelements (1) gestreuten oder reflektierten Lichts ohne Probe ist.

2. Verfahren gemäß Anspruch 1, wobei das Analysieren einer Probe auf einem in der Testelementaufnahme (13) in der Analyseposition positionierten Testelement (1) die Schritte
• Bestrahlen des Analysebereichs (2) mit Licht der mindestens einen Analyselichtquelle (18),
• Detektieren von an dem Analysebereich (2) gestreutem oder reflektiertem Licht durch einen Detektor (12) zum Erhalten von Detektionssignalen und
• Auswerten der Detektionssignale durch eine Auswerteeinheit zum Erhalten von Analyseergebnissen
umfasst.

3. Verfahren gemäß Anspruch 2, wobei zum Kontrollieren, ob der Analysebereich (2) des Testelements (1) in der Analyseposition positioniert ist, und zum Analysieren der Probe derselbe Detektor (12) verwendet wird.

4. Verfahren gemäß einem der Ansprüche 2 oder 3, wobei das Analysieren einer Probe die Schritte
a) Kontrollieren, ob der Analysebereich (2) eines Testelements (1) in der Testelementaufnahme (13) in der Analyseposition positioniert ist,
b) Inkontaktbringen der Probe mit dem Analysebereich (2) zum Erhalten einer photometrisch detektierbaren Veränderung des Analysebereichs (2),
c) Aktivieren einer ersten Analyselichtquelle (18) der Analyseeinheit (10) zum Bestrahlen einer ersten Zone (4) des Analysebereichs (2) und Detektieren des von dem Analysebereich (2) gestreuten oder reflektierten Lichts zum Erhalten von ersten Analysesignalen,
d) Aktivieren einer zweiten Analyselichtquelle (18) der Analyseeinheit (10) zum Bestrahlen einer gegenüber der ersten Zone (4) versetzt angeordneten zweiten Zone (5) des Analysebereichs (2) und Detektieren des von dem Analysebereich (2) gestreuten oder reflektierten Lichts zum Erhalten von zweiten Analysesignalen,
e) Vergleichen der ersten und zweiten Analysesignale durch die Auswerteeinheit zum Erhalten von Vergleichsergebnissen und Auswählen der ersten oder der zweiten Analysesignale anhand der Vergleichsergebnisse zum Ermitteln einer in der Probe enthaltenen Analytkonzentration durch Auswerten der ausgewählten ersten oder zweiten Analysesignale.

5. Verfahren gemäß einem der Ansprüche 1 bis 4 mit den Schritten
i) Aufgeben einer Probe auf einen Probenaufgabeort (8) des Testelements (1),
ii) Aktivieren der mindestens einen Analyselichtquelle (18) zum Bestrahlen des ersten Teilbereichs (6) des Analysebereichs (2) und Detektieren des von dem Analysebereich (2) gestreuten oder reflektierten Lichts mit dem Detektor (12) zum Erhalten eines Detektionssignals,
iii) Aktivieren der Kontrolllichtquelle (17) zum Bestrahlen des zweiten Teilbereichs (7) des Analysebereichs (2), und Detektieren des von dem Analysebereich (2) gestreuten oder reflektierten Lichts mit einem Detektor (12) zum Erhalten eines zweiten Detektionssignals,
iv) Vergleichen eines ermittelten Differenzwertes aus dem zweiten minus dem ersten Detektionssignal mit einem vorgegebenen ersten Differenzwert durch die Auswerteeinheit zum Erkennen einer Unterdosierung der Probe bei Überschreiten des vorgegebenen ersten Differenzwertes.

6. Verfahren gemäß einem der vorhergehenden Ansprüche, wobei die mindestens eine Analyselichtquelle (18) und die Kontrolllichtquelle (17) sequentiell aktiviert werden.

7. Verfahren gemäß einem der Ansprüche 1 bis 6, umfassend ein Aktivieren der Kontrolllichtquelle (17) zum Bestrahlen des zweiten Teilbereichs (7) des Analysebereichs (2) und Detektieren einer Veränderung des von zweiten Teilbereich (7) gestreuten oder reflektierten Lichts durch den Detektor (12), um die Anwesenheit der Probe in dem Analysebereich (2) zu erkennen.

8. Analysesystem zur Analyse einer Probe auf einem analytischen Testelement (1) mit einer Analyseeinheit (10), mit einer Testelementaufnahme (13), wobei ein zu analysierendes Testelement (1) in der Testelementaufnahme (13) relativ zu der Analyseeinheit (10) positioniert ist, und mit einer Kontrolleinheit (10) zur Kontrolle, ob ein Analysebereich (2) des Testelements (1) in der Testelementaufnahme (13) in einer Analyseposition relativ zu der Analyseeinheit (10) positioniert ist, wobei eine Richtung senkrecht zum Analysebereich (2) eine Z-Richtung definiert, wobei die Kontrolleinheit (10) mindestens eine Analyselichtquelle (18) zum Bestrahlen eines ersten Teilbereichs (6) des Analysebereichs (2) und eine Kontrolllichtquelle (17) zum Bestrahlen eines zweiten Teilbereichs (7) des Analysebereichs (2) umfasst, wobei die Kontrolleinheit (10) weiterhin einen Detektor (12) zur Detektion von an dem Analysebereich (2) gestreutem oder reflektiertem Licht der Analyselichtquelle (18) und der Kontrolllichtquelle (17) zum Erhalten eines ersten bzw. eines zweiten Detektionssignals und eine Auswerteeinheit umfasst, wobei zwischen dem in der Testelementaufnahme (13) angeordneten Testelement (1) und dem Detektor (12) ein Begrenzungselement (15) angeordnet ist,
das einen lichtundurchlässigen Bereich (16) und einen lichtdurchlässigen Bereich (14) aufweist, wobei das Begrenzungselement (15) relativ zur Analyselichtquelle (18), zur Kontrolllichtquelle (17) und zum Detektor (12) so positioniert ist, dass an einem in der Testelementaufnahme (13) in einer Fehlposition in Z-Richtung angeordneten Analysebereich (22) eines Testelements (1) gestreutes oder reflektiertes Licht der Kontrolllichtquelle (17) im Wesentlichen auf den lichtundurchlässigen Bereich (16) trifft und nicht den Detektor (12) erreicht und an einem in der Fehlposition in Z-Richtung angeordneten Analysebereich (22) gestreutes oder reflektiertes Licht der Analyselichtquelle (18) im Wesentlichen auf den lichtdurchlässigen Bereich (14) des Begrenzungselements (15) trifft, wobei die Auswerteeinheit eine Vergleichseinheit enthält, die durch ein Vergleichen der Detektionssignale mit mindestens einem vorgegebenen Grenzwert bei einem Unterschreiten des Grenzwerts eine Fehlposition des Analysebereichs in Z-Richtung erkennt, wobei der Grenzwert ein Grenzwert für die Differenz zweier relativer Remissionen der Analyselichtquelle (18) und der Kontrolllichtquelle (17) ist, wobei die relative Remission das Verhältnis der an dem Analysebereich (2) des Testelements (1) gestreuten oder reflektierten und durch den Detektor (12) detektierten Lichtintensität beim Kontrollieren, ob der Analysebereich (2) in der Testelementaufnahme (13) in der Analyseposition positioniert ist, zu der durch den Analysebereich (2) eines in der Analyseposition positionierten Testelements (1) gestreuten oder reflektierten Lichts ohne Probe ist, wobei die Vergleichseinheit bei einem Unterschreiten eines vorgegebenen Differenzwertes aus dem zweiten minus dem ersten Detektionssignal eine Fehlposition des Analysebereichs (22) in Z-Richtung in der Testelementaufnahme (13) erkennt.

## Claims

1. Method for analyzing a sample on a test element (1) in an analysis system (9) having a test element receptacle (13) and an analysis unit (10), comprising monitoring whether an analysis region (2) of the test element is positioned in the test element receptacle in an analysis position relative to the analysis unit, a direction perpendicular to the analysis region (2) defining a Z direction, the monitoring comprising the steps of
• irradiation of the analysis region (2) with light from at least one analysis light source (18) and a monitoring light source (17),
• detection of light from the analysis light source (18) and the monitoring light source (17) scattered or reflected at the analysis region (2) by a detector (12) for obtaining a first and respectively second detection signal, and
• evaluation of the detection signals by an evaluation unit,
a light-transmissive region (14) arranged between the test element (1) and the detector (12) being delimited by a delimiting element (15) having a light-opaque region (16), the delimiting element (15) being positioned relative to the analysis light source (18), the monitoring light source (17) and the detector (12) in such a way that light from the monitoring light source (17) scattered or reflected at an analysis region (22) of a test element (1) that is arranged in the test element receptacle (13) in an incorrect position in the Z direction essentially impinges on the light-opaque region (16) and does not reach the detector and that light from the analysis light source (18) scattered or reflected at an analysis region (22) of a test element (1) that is arranged in the test element receptacle (13) in an incorrect position in the Z direction essentially impinges on the light-transmissive region (14),
the method comprising the following steps
i) application of the sample to a sample application location (8) of the test element (1),
ii) activation of the analysis light source (18) for the irradiation of a first partial region (6) of the analysis region (2) and detection of the light scattered or reflected by the analysis region (2) by means of the detector (12) for obtaining a first detection signal,
iii) activation of the monitoring light source (17) for the irradiation of a second partial region (7) of the analysis region (2), and detection of the light scattered or reflected by the analysis region (2) by means of a detector (12) for obtaining a second detection signal,
iv) comparison of a difference value determined from the second minus the first detection signal with a predetermined limit value by the evaluation unit for identifying an incorrect position of the analysis region (2) in the Z direction in the test element receptacle (13) when the predetermined limit value is undershot, the limit value being a limit value for the difference between two relative remissions of the analysis light source (18) and the monitoring light source (17), the relative remission being the ratio of the light intensity scattered or reflected at the analysis region (2) of the test element (1) and detected by the detector (12) during monitoring of whether the analysis region (2) is positioned in the test element receptacle (13) in the analysis position to the light scattered or reflected by the analysis region (2) of a test element (1) positioned in the analysis position, without a sample.

2. Method according to Claim 1, wherein the analysis of a sample on a test element (1) positioned in the test element receptacle (13) in the analysis position comprises the steps of
• irradiation of the analysis region (2) with light from the at least one analysis light source (18),
• detection of light scattered or reflected at the analysis region (2) by a detector (12) for obtaining detection signals, and
• evaluation of the detection signals by an evaluation unit for obtaining analysis results.

3. Method according to Claim 2, wherein the same detector (12) is used for monitoring whether the analysis region (2) of the test element (1) is positioned in the analysis position and for analyzing the sample.

4. Method according to either of Claims 2 and 3, wherein the analysis of a sample comprises the steps of
a) monitoring whether the analysis region (2) of a test element (1) is positioned in the test element receptacle (13) in the analysis position,
b) contacting the sample with the analysis region (2) for obtaining a photometrically detectable change in the analysis region (2),
c) activation of a first analysis light source (18) of the analysis unit (10) for the irradiation of a first zone (4) of the analysis region (2) and detection of the light scattered or reflected by the analysis region (2) for obtaining first analysis signals,
d) activation of a second analysis light source (18) of the analysis unit (10) for the irradiation of a second zone (5) of the analysis region (2), said second zone being arranged in a manner offset relative to the first zone (4), and detection of the light scattered or reflected by the analysis region (2) for obtaining second analysis signals,
e) comparison of the first and second analysis signals by the evaluation unit for obtaining comparison results and selection of the first or the second analysis signals on the basis of the comparison results for determining an analyte concentration contained in the sample by evaluation of the selected first or second analysis signals.

5. Method according to one of Claims 1 to 4 comprising the steps of
i) application of a sample to a sample application location (8) of the test element (1),
ii) activation of the at least one analysis light source (18) for the irradiation of the first partial region (6) of the analysis region (2) and detection of the light scattered or reflected by the analysis region (2) by means of the detector (12) for obtaining a detection signal,
iii) activation of the monitoring light source (17) for the irradiation of the second partial region (7) of the analysis region (2), and detection of the light scattered or reflected by the analysis region (2) by means of a detector (12) for obtaining a second detection signal,
iv) comparison of a difference value determined from the second minus the first detection signal with a predetermined limit value by the evaluation unit for identifying an underdosing of the sample in the case where the predetermined first difference value is exceeded.

6. Method according to one of the preceding claims wherein the at least one analysis light source (18) and the monitoring light source (17) are activated sequentially.

7. Method according to one of Claims 1 to 6, comprising an activation of the monitoring light source (17) for the irradiation of the second partial region (7) of the analysis region (2) and detection of a change in the light scattered or reflected by the second partial region (7) by the detector (12) in order to identify the presence of the sample in the analysis region (2).

8. Analysis system for analyzing a sample on an analytical test element (1) having an analysis unit (10), having a test element receptacle (13), a test element (1) to be analyzed being positioned in the test element receptacle (13) relative to the analysis unit (10), and having a monitoring unit (10) for monitoring whether an analysis region (2) of the test element (1) is positioned in the test element receptacle (13) in an analysis position relative to the analysis unit (10), a direction perpendicular to the analysis region (2) defining a Z direction, the monitoring unit (10) comprising at least one analysis light source (18) for irradiating a first partial region (6) of the analysis region (2) and a monitoring light source (17) for irradiating a second partial region (7) of the analysis region (2), the monitoring unit (10) furthermore comprising a detector (12) for detecting light from the analysis light source (18) and the monitoring light source (17) scattered or reflected at the analysis region (2) for obtaining a first and respectively a second detection signal, and an evaluation unit, wherein a delimiting element (15) is arranged between the test element (1) arranged in the test element receptacle (13) and the detector (12), said delimiting element having a light-opaque region (16) and a light-transmissive region (14), the delimiting element (15) being positioned relative to the analysis light source (18), the monitoring light source (17) and the detector (12) in such a way that light from the monitoring light source (17) scattered or reflected at an analysis region (22) of a test element (1) that is arranged in the test element receptacle (13) in an incorrect position in the Z direction essentially impinges on the light-opaque region (16) and does not reach the detector (12), and light from the analysis light source (18) scattered or reflected at an analysis region (22) arranged in the incorrect position in the Z direction essentially impinges on the light-transmissive region (14) of the delimiting element (15), the evaluation unit containing a comparison unit which, by means of a comparison of the detection signals with at least one predetermined limit value, identifies an incorrect position of the analysis region in the Z direction in the case where the limit value is undershot, the limit value being a limit value for the difference between two relative remissions of the analysis light source (18) and the monitoring light source (17), the relative remission being the ratio of the light intensity scattered or reflected at the analysis region (2) of the test element (1) and detected by the detector (12) during monitoring of whether the analysis region (2) is positioned in the test element receptacle (13) in the analysis position to the light scattered or reflected by the analysis region (2) of a test element (1) positioned in the analysis position, without a sample, the comparison unit, in the case where a predetermined difference value formed from the second minus the first detection signal is undershot, identifying an incorrect position of the analysis region (22) in the Z direction in the test element receptacle (13).

## Revendications

1. Procédé d'analyse d'un échantillon d'élément de test (1) dans un système d'analyse (9) pourvu d'un réceptacle d'élément de test (13) et d'une unité d'analyse (10), comprenant un contrôle de si une zone d'analyse (2) de l'élément de test prévu dans le réceptacle d'élément de test est positionnée dans une position d'analyse par rapport à l'unité d'analyse, une direction définissant une direction Z perpendiculaire à la zone d'analyse (2), le contrôle présentant les étapes suivantes :
- irradiation de la zone d'analyse (2) avec la lumière d'au moins une source lumineuse d'analyse (18) et d'une source lumineuse de contrôle (17) ;
- détection de la lumière dispersée ou réfléchie au niveau de la zone d'analyse (2) de la source lumineuse d'analyse (18) et de la source lumineuse de contrôle (17) par le biais d'un détecteur (12) afin d'obtenir un premier et/ou un deuxième signal de détection ; et
- analyse des signaux de détection par le biais d'une unité d'analyse ;
une zone translucide (14) disposée entre l'élément de test (1) et le détecteur (12) étant délimitée par un élément de délimitation (15) comportant une zone opaque (16), l'élément de délimitation (15) étant positionné de telle sorte par rapport à la source lumineuse d'analyse (18), à la source lumineuse de contrôle (17) et au détecteur (12) que la lumière dispersée ou réfléchie de la source lumineuse de contrôle (17) percute pour l'essentiel la zone opaque (16) au niveau d'une zone d'analyse (22) disposée, dans le réceptacle d'élément de test (13), dans une position erronée dans la direction Z, d'un élément de test (1) et n'atteignant pas le détecteur et la lumière dispersée ou réfléchie de la source lumineuse d'analyse (18) percutant pour l'essentiel la zone translucide (14) au niveau d'une zone d'analyse (22) disposée, dans le réceptacle d'élément de test (13), dans une position erronée dans la direction Z, d'un élément de test (1) ;
le procédé comprenant les étapes suivantes :
i) placement de l'échantillon sur un site de placement d'échantillon (8) de l'élément de test (1) ;
ii) activation de la source lumineuse d'analyse (18) en vue d'irradier une première zone partielle (6) de la zone d'analyse (2) et détection de la lumière dispersée ou réfléchie par la zone d'analyse (2) par le biais du détecteur (12) afin d'obtenir un premier signal de détection ;
iii) activation de la source lumineuse de contrôle (17) en vue d'irradier une deuxième zone partielle (7) de la zone d'analyse (2) et détection de la lumière dispersée ou réfléchie par la zone d'analyse (2) par le biais d'un détecteur (12) afin d'obtenir un deuxième signal de détection ;
iv) comparaison d'une valeur de différence calculée à partir du deuxième signal de détection auquel on soustrait le premier signal de détection à la valeur limite prédéfinie par le biais de l'unité d'analyse en vue d'identifier une position erronée de la zone d'analyse (2) dans la direction Z dans le réceptacle d'élément de test (13) en cas de passage en dessous de la valeur limite prédéfinie, la valeur limite étant une valeur limite pour la différence de deux rémissions relatives de la source lumineuse d'analyse (18) et de la source lumineuse de contrôle (17), la rémission relative étant le rapport de l'intensité lumineuse dispersée ou réfléchie au niveau de la zone d'analyse (2) de l'élément de test (1) et détectée par le détecteur (12) lors du contrôle de si la zone d'analyse (2) prévue dans le réceptacle d'élément de test (13) est positionnée dans la position d'analyse dans laquelle la lumière dispersée ou réfléchie par la zone d'analyse (2) d'un élément de test (1) positionné dans la position d'analyse est sans échantillon.

2. Procédé selon la revendication 1, l'analyse d'un échantillon d'un élément de test (1) positionné dans la position d'analyse sur un réceptacle d'élément de test (13) comprenant les étapes suivantes :
- irradiation de la zone d'analyse (2) avec la lumière de l'au moins une source lumineuse d'analyse (18) ;
- détection de la lumière dispersée ou réfléchie au niveau de la zone d'analyse (2) par le biais d'un détecteur (12) afin d'obtenir des signaux de détection ; et
- analyse des signaux de détection par le biais d'une unité d'analyse afin d'obtenir des résultats d'analyse.

3. Procédé selon la revendication 2, le même détecteur (12) étant utilisé pour contrôler si la zone d'analyse (2) de l'élément de test (1) est positionnée dans la position d'analyse et pour analyser l'échantillon.

4. Procédé selon l'une quelconque des revendications 2 ou 3, l'analyse d'un échantillon comprenant les étapes suivantes :
a) contrôle de si la zone d'analyse (2) d'un élément de test (1) est positionnée dans la position d'analyse dans le réceptacle d'élément de test (13) ;
b) mise en contact de l'échantillon avec la zone d'analyse (2) afin d'obtenir une modification détectable sur le plan photométrique de la zone d'analyse (2) ;
c) activation d'une première source lumineuse d'analyse (18) de l'unité d'analyse (10) en vue d'irradier une première zone (4) de la zone d'analyse (2) et détection de la lumière dispersée ou réfléchie par la zone d'analyse (2) afin d'obtenir des premiers signaux d'analyse ;
d) activation d'une deuxième source lumineuse d'analyse (18) de l'unité d'analyse (10) en vue d'irradier une deuxième zone (5) de la zone d'analyse (2) disposée de façon décalée par rapport à la première zone (4) et détection de la lumière dispersée ou réfléchie par la zone d'analyse (2) afin d'obtenir des deuxièmes signaux d'analyse ;
e) comparaison des premiers et deuxièmes signaux d'analyse par le biais de l'unité d'analyse afin d'obtenir des résultats de comparaison et sélection des premiers ou deuxièmes signaux d'analyse au moyen des résultats de comparaison en vue de calculer une concentration analysée contenue dans l'échantillon contenu par analyse des premiers ou deuxièmes signaux d'analyse sélectionnés.

5. Procédé selon l'une quelconque des revendications 1 à 4, comprenant les étapes suivantes :
i) placement d'un échantillon sur un site de placement d'échantillon (8) de l'élément de test (1) ;
ii) activation de l'au moins une source lumineuse d'analyse (18) en vue d'irradier la première zone partielle (6) de la zone d'analyse (2) et détection de la lumière dispersée ou réfléchie par la zone d'analyse (2) par le biais du détecteur (12) afin d'obtenir un signal de détection ;
iii) activation de la source lumineuse de contrôle (17) en vue d'irradier la deuxième zone partielle (7) de la zone d'analyse (2) et détection de la lumière dispersée ou réfléchie par la zone d'analyse (2) par le biais d'un détecteur (12) afin d'obtenir un deuxième signal de détection ;
iv) comparaison d'une valeur de différence calculée à partir du deuxième signal de détection auquel on soustrait le premier signal de détection à la valeur limite prédéfinie par le biais de l'unité d'analyse en vue d'identifier un sous-dosage de l'échantillon en cas de dépassement de la première valeur de différence prédéfinie.

6. Procédé selon l'une quelconque des revendications précédentes, l'au moins une source lumineuse d'analyse (18) et la source lumineuse de contrôle (17) étant activées de façon séquentielle.

7. Procédé selon l'une quelconque des revendications 1 à 6, comprenant en outre une activation de la source lumineuse de contrôle (17) en vue d'irradier la deuxième zone partielle (7) de la zone d'analyse (2) et détection d'une modification de la lumière dispersée ou réfléchie par la deuxième zone partielle (7) par le biais du détecteur (12), pour identifier la présence de l'échantillon dans la zone d'analyse (2).

8. Système d'analyse permettant d'analyser un échantillon d'élément de test (1) analytique à l'aide d'une unité d'analyse (10) pourvue d'un réceptacle d'élément de test (13), un élément de test (1) à analyser étant positionné dans le réceptacle d'élément de test (13) par rapport à l'unité d'analyse (10), et pourvue d'une unité de contrôle (10) permettant de contrôler si une zone d'analyse (2) de l'élément de test (1) est positionnée dans une position d'analyse par rapport à l'unité d'analyse (10) dans le réceptacle d'élément de test (13), une direction perpendiculaire à la zone d'analyse (2) définissant une direction Z, l'unité de contrôle (10) comprenant au moins une source lumineuse d'analyse (18) en vue d'irradier une première zone partielle (6) de la zone d'analyse (2) et une source lumineuse de contrôle (17) en vue d'irradier une deuxième zone partielle (7) de la zone d'analyse (2), l'unité de contrôle (10) comprenant en outre un détecteur (12) en vue de détecter la lumière dispersée ou réfléchie au niveau de la zone d'analyse (2) de la source lumineuse d'analyse (18) et de la source lumineuse de contrôle (17) afin d'obtenir un premier et/ou un deuxième signal de détection et une unité d'analyse, un élément de délimitation (15) étant disposé entre l'élément de test (1) disposé dans le réceptacle d'élément de test (13) et le détecteur (12), ledit élément de délimitation comportant une zone opaque (16) et une zone translucide (14), l'élément de délimitation (15) étant disposé de telle sorte par rapport à la source lumineuse d'analyse (18), à la source lumineuse de contrôle (17) et au détecteur (12) que la lumière dispersée ou réfléchie de la source lumineuse de contrôle (17) percute pour l'essentiel la région (16) imperméable à la lumière au niveau d'une zone d'analyse (22) disposée, dans le réceptacle d'élément de test (13), dans une position erronée dans la direction Z de l'élément de test (1) et n'atteignant pas le détecteur (12) et que la lumière dispersée ou réfléchie de la source lumineuse d'analyse (18) percute pour l'essentiel la zone translucide (14) de l'élément de délimitation (15) au niveau d'une zone d'analyse (22) disposée dans la position erronée dans la direction Z, l'unité d'analyse contenant une unité de comparaison identifiant une position erronée de la zone d'analyse dans la direction Z en comparant les signaux de détection à au moins une valeur limite prédéfinie en cas de passage en dessous de la valeur limite, la valeur limite étant une valeur limite pour la différence de deux rémissions relatives de la source lumineuse d'analyse (18) et de la source lumineuse de contrôle (17), la rémission relative étant le rapport de l'intensité lumineuse dispersée ou réfléchie au niveau de la zone d'analyse (2) de l'élément de test (1) et détectée par le détecteur (12) lors du contrôle de si la zone d'analyse (2) prévue dans le réceptacle d'élément de test (13) est positionnée dans la position d'analyse dans laquelle la lumière dispersée ou réfléchie par la zone d'analyse (2) d'un élément de test (1) positionné dans la position d'analyse est sans échantillon, l'unité de comparaison identifiant, en cas de passage en dessous d'une valeur de différence prédéfinie, une position erronée de la zone d'analyse (22) dans la direction Z, dans le réceptacle d'élément de test (13), à partir du deuxième signal de détection auquel on soustrait le premier signal de détection.
